# FASCICULE DE BREVET EUROPEEN

(11) **EP 1 540 152 B1**
(45) Date de publication et mention de la délivrance du brevet: **12.04.2006**
(21) Numéro de dépôt: 03769543.4
(22) Date de dépôt: 29.08.2003
(51) Int. Cl.: F01N 3/08, F01N 3/30, F01N 3/20

(54) **SYSTEME DE TRAITEMENT DE GAZ D'ECHAPPEMENT COMPORTANT UN SYSTEME D'IONISATION DES GAZ AVEC INJECTION D'AIR IONISE**
SYSTEM ZUR ABGASBEHANDLUNG MIT EINEM GASIONISIERSYSTEM MIT EINSPRITZUNG VON IONISIERTER LUFT
SYSTEM FOR EXHAUST GAS TREATMENT COMPRISING A GAS IONIZING SYSTEM WITH IONIZED AIR INJECTION

(30) Priorité: 30.08.2002 FR 0210752
(43) Date de publication de la demande: 15.06.2005
(73) Titulaire: Renault s.a.s., 92100 Boulogne Billancourt (FR); Peugeot Citroen Automobiles SA, 92200 Neuilly sur Seine (FR)
(72) Inventeur: Calvo, Sabine, F-78340 Les Clayes sous Bois (FR); Dupre, Sandrine, F-91400 Orsay (FR); Eymerie, Stéphane, F-27120 Pacy sur Eure (FR); Goldman, Alice, F-91190 Gif-sur-Yvette (FR); Goldman, Max, F-91190 Gif-sur-Yvette (FR); Lendresse, Yvane, F-92500 Rueil Malmaison (FR)
(74) Mandataire: Kohn, Philippe
(86) Numéro de dépôt international: PCT/FR2003/002614
(87) Numéro de publication internationale: WO 2004/020798

(56) Documents cités:
- EP-A- 1 020 620
- WO-A-03/027452
- AT-B- 387 158
- CH-A- 345 765
- FR-A- 2 481 945
- GB-A- 2 284 771
- US-B1- 6 274 006

## Description

L'invention propose un système de traitement des gaz d'échappement d'un moteur à combustion de véhicule automobile, notamment d'un moteur diesel ou d'un moteur à essence à mélange pauvre, comportant un circuit d'échappement de gaz brûlés, du type dans lequel le circuit d'échappement comporte un système d'ionisation des gaz brûlés.

La réglementation concernant les émissions de véhicules concerne essentiellement quatre types de polluants : les hydrocarbures imbrûlés HC, le monoxyde de carbone CO, les oxydes d'azote NOx et les particules.

Dans le cas d'un moteur fonctionnant avec un excès d'oxygène, c'est-à-dire un moteur du type à essence à mélange pauvre ou du type diesel, la réduction des émissions d'hydrocarbures imbrûlés HC et de monoxyde de carbone CO est obtenue grâce à un catalyseur d'oxydation qui, dans de grandes proportions, les transforme en dioxyde de carbone CO₂.

Cette réaction d'oxydation est d'autant plus efficace que la température du catalyseur est élevée. C'est pourquoi, on cherche à disposer ce catalyseur le plus près possible de la sortie de la chambre de combustion de chaque cylindre du moteur.

Le traitement des oxydes d'azote NOx peut être envisagé au moyen d'un piège à oxydes d'azote NOx dit "NOx-trap".

Dans le cas d'un moteur à mélange pauvre, l'utilisation du piège à oxydes d'azote est conditionnée par la possibilité d'augmenter ponctuellement la richesse des gaz d'échappement qui traversent le piège.

Toutefois, aujourd'hui, ces systèmes de traitement des oxydes d'azote NOx et des d'hydrocarbures imbrûlés HC sont encore très peu utilisés car leur efficacité n'est pas optimale dans toutes les conditions de roulage. Par ailleurs, leur coût n'est pas négligeable et leur utilisation entraîne des surconsommations importantes de carburant.

Pour pallier leur manque d'efficacité, des travaux sur le couplage de ces systèmes avec la technologie des plasmas non-thermiques sont en cours.

La technique consiste à former des espèces métastables, des radicaux libres et des ions très réactifs, par collision entre les molécules du gaz et les électrons énergétiques produits par une décharge, et ceci, sans élévation de la température du milieu.

Cette décharge est obtenue en appliquant, entre deux électrodes dont les configurations géométriques peuvent être diverses, des signaux de tension et fréquence élevées. Dans les gaz d'échappement des moteurs dits à mélange pauvre, de telles décharges modifient la composition du mélange gazeux en favorisant des réactions telles que l'oxydation de monoxyde d'azote NO en dioxyde d'azote NO₂, la formation d'hydrocarbures partiellement oxydés à partir des imbrûlés, et enfin des réactions d'oxydation des particules conduisant à leur activation.

Combinées à un système de post-traitement catalytique de réduction des oxydes d'azote NOx, ces décharges génératrices de plasma qui sont localisées en amont du catalyseur ou dans le catalyseur permettent d'obtenir des taux de réduction supérieurs à ceux atteints avec un catalyseur seul, et ceci dans un domaine de température beaucoup plus large.

Combinées à un filtre à particules, les décharges génératrices de plasma facilitent la réaction de combustion de la suie, nécessaire à la régénération du média filtrant. En effet, la formation d'espèces activées oxydantes, telles que l'ozone O₃ et le dioxyde d'azote NO₂, et d'espèces réductrices, telles que des hydrocarbures partiellement oxydés et de la suie activée, est favorable à un démarrage de l'oxydation des particules à plus basse température.

Afin d'assurer des efficacités de réduction toujours plus performantes, il est nécessaire d'obtenir, dans un premier temps, une conversion optimale du monoxyde d'azote NO en dioxyde d'azote NO₂.

De manière générale, deux réactions principales mènent à l'oxydation du monoxyde d'azote NO en dioxyde d'azote NO₂ :

*NO*+*O*+*M* → *NO*₂ +*M* ,

avec M = N₂ ou O₂, et

*NO* + *O*₃ → *NO*₂ + *O*₂

Lorsque les plasmas non-thermiques sont utilisés en tant que "ozoneur" via le traitement de l'air ambiant, il est possible de produire jusqu'à 50g d'ozone O₃ par kWh consommé. Dans ce cas, l'oxygène atomique O formé dans l'air ambiant est entièrement disponible pour la formation d'ozone O₃.

Les réactions concurrentes à la production d'ozone O₃ telles que les réactions de production de monoxyde d'azote NO, n'interviennent significativement que lorsque les puissances utilisées sont suffisantes pour introduire une élévation de température qui favorise la cinétique de formation de monoxyde d'azote NO. Les paramètres limitant la production d'ozone sont la température (l'ozone O₃ étant thermodynamiquement instable à partir de 600-650 K) et la teneur en vapeur d'eau (degré d'hygrométrie).

Dans les publications "NO Oxidation Process in Dielectric Barrier Discharge using Multipoint-to-plane Electrodes" et "NOx removal for diesel Engine exhaust by ozone injection method" présentées lors du congrès "Non thermal plasma techonlogy for pollution control" en avril 2001 en Corée du Sud, il a été proposé d'injecter de l'air ionisé par un plasma non thermique, c'est à dire de l'air qui comporte une forte concentration en ozone O₃ dans les gaz d'échappement. Voir aussi les documents FR2481945A et GB2284771A.

Bien que de tels procédés permettent de réduire notablement la quantité d'oxydes d'azote NOx présents dans les gaz d'échappement, leur efficacité est limitée à environ 60%.

L'invention vise à améliorer le traitement des oxydes d'azote par les plasmas non thermiques tels que décrits dans le document WO03/027452A, qui est considéré comme l'état de la technique selon l'article 54(3) CBE.

L'invention propose donc un système de traitement du type décrit précédemment, dans lequel un circuit d'échappement comporte: un système d'injection d'air ionisé en amont et/ou en aval du système d'ionisation des gaz brûlés ;
- des moyens d'ionisation de l'air ambiant qui transforment une partie de l'oxygène contenu dans l'air ambiant en ozone ;
- les moyens d'ionisation de l'air et le système d'ionisation des gaz brûlés consistent chacun en au moins un réacteur du type à décharges génératrices de plasma non thermiques ;
- le système d'ionisation des gaz brûlés comporte plusieurs réacteurs agencés en série qui ionisent successivement les gaz brûlés.

Selon d'autres caractéristiques de l'invention :
- les différents réacteurs sont des compartiments séparés d'une enceinte unique ;
- le circuit d'échappement comporte un catalyseur de traitement des oxydes d'azote qui est situé en aval du système d'injection d'air ionisé.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique d'une ligne d'échappement d'un moteur à combustion qui comporte un système de traitement conforme à l'invention ;
- la figure 2 est une représentation schématique du système de traitement représenté à la figure 1 ;
- les figures 3 à 5 sont des vues similaires à celle de la figure 2 représentant des variantes de réalisation de l'invention.

Dans la description qui va suivre, des éléments identiques, similaires ou analogues seront désignés par les mêmes chiffres de référence.

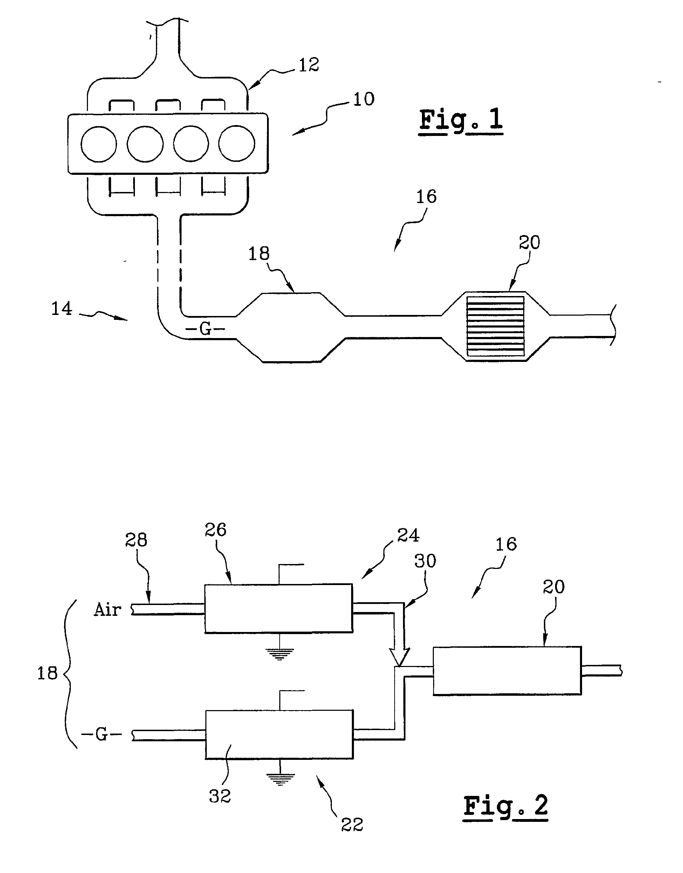

On a représenté à la figure 1 un moteur à combustion interne 10 qui est réalisé conformément aux enseignements de l'invention.

Le moteur 10 est ici du type diesel ou du type à essence à mélange pauvre, c'est à dire qu'il fonctionne avec un excès d'oxygène par rapport aux conditions stoechiométriques.

Le moteur 10 comporte un circuit d'admission 12 de gaz d'admission et un circuit d'échappement 14 de gaz brûlés G.

Le circuit d'échappement 14 comporte un dispositif de dépollution 16, qui traite les gaz brûlés G de manière à limiter le rejet de polluants dans l'atmosphère.

Le dispositif de dépollution 16 comporte un système de traitement 18 des gaz brûlés G qui permet de transformer le monoxyde d'azote NO en dioxyde d'azote NO₂. En aval du système de traitement 18, le dispositif de dépollution 16 comporte un catalyseur 20 qui traite le dioxyde d'azote NO₂ pour le transformer en azote N₂ et en oxygène O₂ qui sont des constituants naturels de l'air.

Comme on l'a représenté à la figure 2, le système de traitement 18 comporte un système d'ionisation 22 des gaz brûlés G qui consiste en un réacteur 32 du type à décharges génératrices de plasma non thermique.

Ce réacteur permet d'oxyder le monoxyde d'azote NO en dioxyde d'azote NO₂. L'oxydation du monoxyde d'azote NO en dioxyde d'azote NO₂ s'effectue directement ou indirectement via l'oxygène atomique. Or, il s'avère, et l'ensemble des études menées sur le sujet le confirme, que cette conversion du monoxyde d'azote NO en dioxyde d'azote NO₂ ne peut être complète et tend en fait vers une limite asymptotique, en particulier du fait que le dioxyde d'azote NO₂ atteint des concentrations telles que la réaction de réduction

*NO*₂ + *O* → *NO* + *O*₂

neutralise la réaction d'oxydation initiale.
A cet effet, et conformément à l'invention, le système de traitement 18 comporte un système d'injection d'air ionisé 24 qui est ici agencé en aval du système d'ionisation 22 des gaz brûlés G, cependant, selon une variante (non représentée) de l'invention, le système d'injection d'air ionisé 24 est agencé en amont du système d'ionisation 22 des gaz brûlés G.

Ce système d'injection d'air ionisé 24 comporte un système d'ionisation de l'air 26 qui consiste en un réacteur du type à décharges génératrices de plasma non thermique.

Les plasmas produits dans ces réacteurs 22, 26, 32 sont des plasmas dits non thermiques, générés par des décharges de type "décharge couronne". Ils sont produits entre des électrodes nues ou recouvertes de barrières diélectriques de configurations variées pouvant aller de plans parallèles, et dans ce cas avec au moins une barrière diélectrique, à des géométries à champ appliqué fortement hétérogène (multipointes-plans, fil ou vis-plan coplanaires, fil ou vis-cylindre coaxiaux, etc... ).

Les distances inter-électrodes (définies comme les distances entre électrodes en absence de diélectrique, entre l'électrode et le diélectrique en présence d'une unique barrière diélectrique, entre diélectriques en présence de deux barrières diélectriques), peuvent être identiques ou différentes pour chacun des réacteurs et par ailleurs variables suivant les conditions de traitement (débit de gaz à traiter par exemple).

Les effluents gazeux, injectés à pression atmosphérique ou différente, peuvent s'écouler perpendiculairement ou parallèlement au plasma. Enfin, suivant la géométrie adoptée, l'alimentation des réacteurs 22, 26, 32, qui peut être commune ou différenciée pour chaque réacteur 22, 26, 32, fournit une tension variable qui pourra être continue, pulsée ou alternative.

Le système d'injection d'air ionisé 24 comporte un circuit d'admission d'air ambiant 28 qui relie le réacteur 26 à l'air ambiant par l'intermédiaire d'un filtre à air (non représenté).

Conformément à l'invention, le réacteur 26 transforme l'oxygène O contenu dans l'air en ozone O₃, et il est apte à produire environ 50g d'ozone O₃ par kWh consommé.

L'air ionisé qui comporte l'ozone O₃ produit est alors injecté dans le circuit d'échappement 14 par l'intermédiaire d'un conduit d'injection 30 en aval du système d'ionisation 22 des gaz brûlés G de sorte que l'ozone O₃ produit réagisse avec le monoxyde d'azote NO initialement contenu dans les gaz brûlés G, lorsque le système d'injection d'air ionisé 24 est agencé en amont du système d'ionisation des gaz brûlés G, ou bien avec le monoxyde d'azote NO résiduel contenu dans les gaz brûlés G lorsque le système d'injection d'air ionisé 24 est agencé en aval du système d'ionisation 22 des gaz brûlés G.

Le système de traitement 18 comporte aussi des moyens non représentés de contrôle du réacteur 26 d'ionisation de l'air pour produire la quantité d'ozone O₃ nécessaire pour la conversion de la totalité du monoxyde d'azote NO.

Il est ainsi possible de convertir la totalité du monoxyde d'azote NO contenu dans les gaz brûlés G.

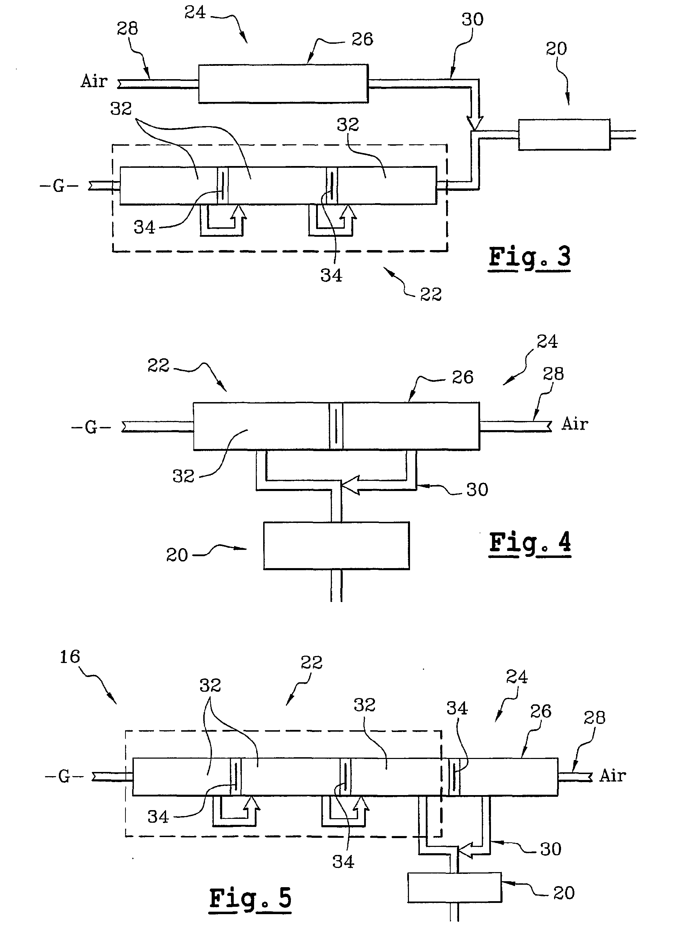

Selon une première variante de l'invention représentée à la figure 3, le système d'ionisation des gaz 32 comporte plusieurs réacteurs 32, ici au nombre de trois, qui sont agencés en série et qui ionisent successivement les gaz brûlés G.

Puisque les gaz brûlés G sont ionisés plusieurs fois, la quantité de monoxyde d'azote NO converti en dioxyde d'azote NO₂ est proche de la valeur limite asymptotique définie ci-dessus, de sorte que le système d'injection d'air ionisé ne doit produire qu'une quantité réduite d'ozone O₃.

Selon un mode de réalisation préféré de l'invention représenté aux figures 3 et 5, les différents réacteurs 32 sont des compartiments d'une enceinte unique qui sont séparés les uns des autres par des parois 34, qui peuvent être étanches ou non.

Selon une deuxième variante de l'invention représentée aux figures 4 et 5, les deux réacteurs, celui du système d'ionisation des gaz 22 et celui du système d'ionisation d'air 26, sont deux compartiments d'une enceinte unique qui sont séparés l'un de l'autre par une paroi 34 qui est étanche.

Selon cette variante, le système d'ionisation des gaz 22 peut ne comporter qu'un seul réacteur 32, comme représenté aux figure 2 et 4, ou bien il peut comporter plusieurs réacteurs 32 agencés en série qui sont eux-mêmes des compartiments d'une enceinte unique.

Un tel agencement permet de réduire le volume total du dispositif de traitement 18 qui consiste alors en une enceinte unique.

Quelle que soit la variante de réalisation du dispositif de traitement 18, les différents réacteurs 26, 32 sont alimentés électriquement par une alimentation unique ou bien par des alimentations hautes tensions qui peuvent être identiques ou bien différenciées selon la fonction du réacteur 26, 32 auquel elles sont associées.

## Revendications

1. Système de traitement (16) des gaz d'échappement (G) d'un moteur à combustion (10) de véhicule automobile, notamment d'un moteur diesel ou d'un moteur à essence à mélange pauvre, comportant un circuit d'échappement (14) de gaz brûlés (G), du type dans lequel le circuit d'échappement (14) comporte un système d'ionisation (22) des gaz brûlés (G) et un système d'injection d'air ionisé (24) en amont et/ou en aval du système d'ionisation (22) des gaz brûlés (G), qui comporte des moyens d'ionisation (26) de l'air ambiant qui transforment une partie de l'oxygène contenu dans l'air ambiant en ozone, et du type dans lequel les moyens d'ionisation (26) de l'air et le système d'ionisation (22) des gaz brûlés (G) consistent chacun en au moins un réacteur (26, 32) du type à décharges génératrices de plasma non thermique,
le système d'ionisation (22) des gaz brûlés (G) comportant plusieurs réacteurs (32) agencés en série qui ionisent successivement les gaz brûlés (G).

2. Système de traitement (16) selon la revendication précédente, **caractérisé en ce que** les différents réacteurs sont des compartiments séparés d'une enceinte unique (18).

3. Système de traitement (16) selon l'une quelconque des revendications précédentes, **caractérisé en ce que** le circuit d'échappement (14) comporte un catalyseur (20) de traitement des oxydes d'azote qui est situé en aval du système d'injection d'air ionisé (24).

## Claims

1. System (16) for treating the exhaust gases (G) of a motor vehicle combustion engine (10), particularly a lean-burn diesel engine or petrol engine, comprising a burnt gas (G) exhaust circuit (14), of the type in which the exhaust circuit (14) comprises a burnt gas (G) ionization system (22) and an ionized air injection system (24) upstream and/or downstream of the burnt gas (G) ionization system (22), which comprises means (26) for ionizing the ambient air that convert a portion of the oxygen present in the ambient air to ozone, and of the type in which the air ionization means (26) and the burnt gas (G) ionization system (22) each consist of at least one reactor (26, 32) of the non-thermal plasma-generating discharge type, the burnt gas (G) ionization system (22) comprising a plurality of reactors (32) arranged in series which successively ionize the burnt gases (G).

2. Treatment system (16) according to the preceding claim, **characterized in that** the various rectors are separate compartments of a single vessel (18).

3. Treatment system (16) according to either of the preceding claims, **characterized in that** the exhaust circuit (14) comprises a catalyst (20) for treating nitrogen oxides, that is positioned downstream of the ionized air injection system (24).

## Patentansprüche

1. System (16) für die Behandlung der Abgase einer Brennkraftmaschine (10) für Kraftfahrzeuge, insbesondere eines Dieselmotors oder eines Magergemisch-Benzinmotors, das eine Auslassleitung (14) für Verbrennungsgase (G) umfasst und von dem Typ ist, bei dem die Auslassleitung (14) ein System (22) zur Ionisierung der Verbrennungsgase und ein System (24) zum Einleiten ionisierter Luft stromaufseitig und/oder stromabseitig von dem System (22) zur Ionisierung der Verbrennungsgase (G) aufweist, wobei das System (24) zum Einleiten ionisierter Luft Mittel (26) zum Ionisieren der Umgebungsluft, die einen Teil des in der Umgebungsluft enthaltenen Sauerstoffs in Ozon umwandeln, umfasst, und von dem Typ ist, bei dem die Luftionisierungsmittel (26) und das System (22) zur Ionisierung der Verbrennungsgase jeweils aus wenigstens einem Reaktor (26, 32) des Typs mit Entladungen zur Erzeugung eines nicht thermischen Plasmas bestehen, wobei das System (22) zur Ionisierung der Verbrennungsgase (G) mehrere Reaktoren (32) umfasst, die in Reihe angeordnet sind und die Vebrennungsgase (G) nacheinander ionisieren.

2. Behandlungssystem (16) nach dem vorhergehenden Anspruch, **dadurch gekennzeichnet, dass** die verschiedenen Reaktoren getrennte Abteile eines einzigen Gehäuses (18) sind.

3. Behandlungssystem (16) nach einem der vorhergehenden Ansprüche, **dadurch gekennzeichnet, dass** der Abgaskreis (14) einen Katalysator (20) für die Behandlung von Stickoxiden umfasst, der sich stromabseitig von dem System (24) zum Einleiten ionisierter Luft befindet.
